# EUROPÄISCHE PATENTSCHRIFT

(11) **EP 0 557 608 B1**
(45) Veröffentlichungstag und Bekanntmachung des Hinweises auf die Patenterteilung: **09.10.1996**
(21) Anmeldenummer: 92121230.4
(22) Anmeldetag: 14.12.1992
(51) Int. Cl.: G01D 5/20

(54) **Spulenaufbau**
Coil assembly
Assemblage de bobines

(30) Priorität: 27.02.1992 DE 4205957
(43) Veröffentlichungstag der Anmeldung: 01.09.1993
(73) Patentinhaber: VOGT electronic Aktiengesellschaft, D-94128 Obernzell (DE)
(72) Erfinder: Mai,Udo, W-8391 Untergriesbach (DE); Wimmer, Willi, W-8396 Hauzenberg (DE); Hartmann,Uwe, . (DE)
(74) Vertreter: Hieke, Kurt

(56) Entgegenhaltungen:
- FR-A- 1 512 207
- FR-A- 2 155 885
- FR-A- 2 605 400
- GB-A- 2 032 186

## Beschreibung

Die Erfindung bezieht sich auf einen Spulenaufbau gemäß dem einleitenden Teil des Patentanspruchs 1.

Spulenaufbauten dieser Art sind aus FR-A-605 400 bekannt.

Bei diesen bekannten Spulenaufbauten besteht der Träger aus einer dielektrischen Platte aus nur begrenzt hitzebeständigem Kunstharz oder Kapton, auf der der sich spiralartig mit kreisförmigen, eliptischen oder recheckigen Windungen erstreckende Leiter als geätzter Mäander aus einer den Träger ursprünglich vollflächig überziehenden metallischen Schicht mittels Fotodruck gebildet ist. Durch Fotodruck mit Ätzen gewonnenem Mäander bedingen relativ große mechanische Abmessungen im Verhältnis zur Windungszahl.

Aus FR-A-1 512 207 ist eine Einrichtung zum Messen mechanischer Größen bekannt, die mit auf eine Platte aus Isoliermaterial gedruckten Spulen bestückt ist, die in üblicher Drucktechnik unter Wegätzen von Material aus einer ursprünglich vollflächigen Schicht elektrisch leitendem Materials hergestellt und bedarfsweise in ihrem Inneren jeweils mit einem stiftförmigen, von der Platte auswärts ragenden Kern aus magnetischem Material versehen sind. Auch bei dieser bekannten Einrichtung bedingen die mittels üblicher Drucktechnik gebildeten Spulen relativ große Abmessungen im Verhältnis zur Windungszahl, und die aus der Isoliermaterialplatte vorragenden Kerne stehen einem ggf. erwünschten mehrlagigen Aufbau im Wege.

Aus FR-A-2 155 885 ist ein Näherungsdetektor mit elektrischem Schwingkreis bekannt, bei dem eine auf einer Scheibe aus ferromagnetischem Material angeordnete Flachspule als gesondertes Bauteil z.B. unter Verwendung eines flachen Spulenkörpers oder mittels einer gedruckten Schaltung realisiert ist und deswegen ebenfalls relativ große Abmessungen im Verhältnis zur Windungszahl aufweist.

Aus GB-A-2 032 186 ist eine Spulenanordnung für die Schwingungsaufnahme bekannt, die ein Plättchen aus Silicium, Kupfer oder Glas als Träger für Spiralmusterschichten aufweist, die von dem Träger und untereinander durch Isolierschichten aus nur begrenzt hitzebeständigem Kunstharz isoliert sind. Die Spiralmusterschichten werden mittels eines photolitografischen Prozesses gewonnen.

Der Erfindung liegt die Aufgabe zugrunde, einen Spulenaufbau gemäß dem einleitenden Teil des Patentanspruchs 1 zu schaffen, der wesentlich kleiner baut als die bekannten Spulenaufbauten und auch besonders unempfindlich gegen Umwelteinflüsse ist.

Die vorgenannte Aufgabe wird durch die im Kennzeichnungsteil des Patentanspruchs 1 genannten Merkmale gelöst.

In Dickschichttechnik können Strukturen erhalten werden, die hinsichtlich Linienbreite und Linienabstand bei weitem feiner sind als diejenigen, die nach FR-A-605 400, FR-A-1 512 207 und FR-A-2 155 885 in Photodrucktechnik erzielbar sind. Allerdings setzt die Dickschichttechnik voraus, daß die jeweilige Unterlage, auf die das einzubrennende Material jeweils aufgebracht worden ist, Brenntemperaturen in der Größenordnung von 1000 K auszuhalten vermag, was beim erfindungsgemäßen Spulenaufbau gewährleistet ist, weil der Träger aus weichmagnetischem oder hartmagnetischem Material besteht, das solche Temperaturen verträgt, so daß es keinerlei Probleme bereitet, das bei der Dickfilmtechnik benutzte pastenförmige Material mit den jeweils gewünschten - z.B. elektrischen oder isolierenden - Eigenschaften im Siebdruckverfahren in der gewünschten Struktur aufzubringen und auf der hochhitzefesten Unterlage einzubrennen.

Der erfindungsgemäße Spulenaufbau eignet sich wegen seiner kleinen Abmessungen insbesondere für induktive Sensoren, speziell induktive Weg- und Winkelsensoren, die gegenüber nach einem anderen Prinzip arbeitenden Sensoren, z.B. optischen Sensoren, verschiedene Vorteile haben, zu denen insbesondere Robustheit und Unempfindlichkeit gegen Verschmutzung gehören, mit den bekannten Spulenaufbauten aber wesentlich größere Abmessungen hatten, als diese nach einem anderen Prinzip arbeitenden Sensoren.

Zur Herstellung des erfindungsgemäßen Spulenaufbaus werden in Additiv-Technik nach einem bekannten Verfahren der Dünnschicht- oder Dickschichttechnik Lagen von spiralförmig verlaufenden Feinstleiterzügen auf eine Außenfläche eines stabilen Trägers aus weichmagnetischem oder hartmagnetischem Material aufgebracht. Je nach verwendetem Trägermaterial wird, falls nötig, zunächst eine Isolierschicht auf den Träger aufgebracht. Nach jedem Aufbringen einer Leiterzug-Lage wird auf diese zur Isolation gegen die nächste Feinstleiter-Lage eine Isolierschicht aufgetragen. Die einzelnen Feinstleiter-Lagen werden mittels die Isolierschichten überbrückender Durchmetallisierungen seriell verbunden. Es lassen sich auf diese Weise auf kleinstem Raum die unterschiedlichsten. Induktivitätswerte realisieren, ohne die auf dem Trägermaterial benötigte Fläche vergrößern zu müssen. Prinzipiell ist es auch möglich, unter bestimmten Umständen mit einer einzigen Feinstleiter-Lage auszukommen, wobei dann eine Durchkontaktierung evtl. nur zum Herstellen einer direkten Verbindung zum innen in der Mitte liegenden Ende des Feinstleiters vorgenommen wird.

Die Verwendung von weichmagnetischem Trägermaterial bewirkt eine einseitige Abschirmung der Spule gegen magnetische Fremdfelder, vergrößert die Induktivität und sorgt für eine Richtcharakteristik des Feldes der Spule. Für besondere Aufgaben können die Feinstleiter-Lagen mit den dazwischen befindlichen Isolierschichten aber auch auf hartmagnetische Träger aufgebracht werden.

Die abhängigen Ansprüche betreffen bevorzugte Ausgestaltungen des Spulenaufbaus gemäß Patentanspruch 1 und bevorzugte Verwendungen von diesem.

Der erfindungsgemäße Spulenaufbau eignet sich besonders gut zur Verwendung bei eg- oder Winkelsensoren. Das Funktionsprinzip solcher Sensoren beruht auf Güte- bzw. Induktivitätsänderungen bei Einbringung von elektrisch leitendem Material in das Spulenfeld. Die in diesem Material entstehenden Wirbelströme verringern die Güte, und die aus ihnen resultierende Gegeninduktivität verringert die Induktivität der Spule. Die Umformung in ein elektrisches Signal erfolgt am einfachsten durch Parallelschaltung eines Kondensators zum Spulenaufbau und Beaufschlagung des Schwingkreises mit einer Wechselspannung fester Frequenz. Ausgewertet wird entweder die durch Güte- und Induktivitätsveränderung verursachte Spannungsänderung, oder die hauptsächlich durch Induktivitätsveränderung hervorgerufene Phasenänderung, d.h. die Änderung der Phasenlage zwischen Strom und Spannung.

Der Bezug zu dem zu messenden Weg oder Winkel wird durch entsprechend ausgebildetes elektrisch leitendes Material hergestellt, das an dem Spulenaufbau -oder an dem der Spulenaufbau- über die zu messende Wegstrecke oder über den zu messenden Winkel vorbeigeführt wird.

In der Zeichnung sind Ausführungsbeispiele des erfindungsgemäßen Spulenaufbaus und der Verwendung desselben zum Abtasten von sich über eine zu messende Wegstrecke oder einen zu messenden Winkel erstreckenden Flächen aus elektrisch leitendem Material dargestellt.

Es zeigt:
- Fig.1: unten einen Schnitt durch einen erfindungsgemäßen Spulenaufbau, und zwar senkrecht zu den Feinstleiter-Lagen und Isolierschichten und, darüber, die Feinstleiter-Lagen des Spulenaufbaus in Draufsicht,

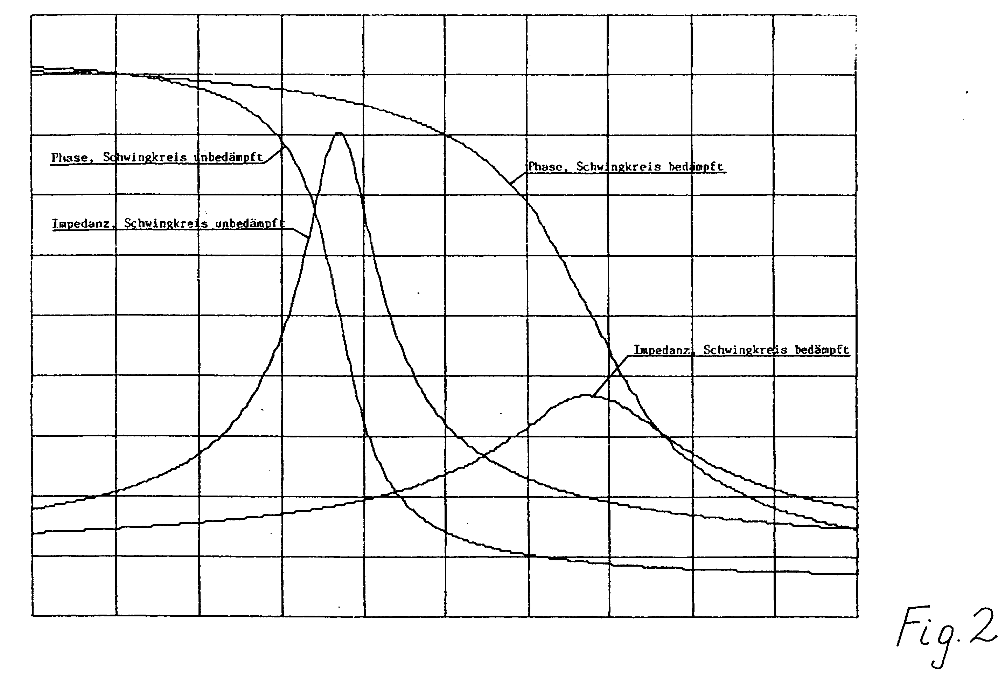

- Fig.2: ein Diagramm, das die Phase des Signals und die Impedanz des Spulenaufbaus für die beiden Fälle wiedergibt, daß der den Spulenaufbau beinhaltende Schwingkreis unbedämpft oder bedämpft ist,
- Fig.3: die Verwendung eines erfindungsgemäßen Spulenaufbaus zum Abtasten eines Geberlineals, das eine zu messende Wegstrecke vorgibt und mit einer sich entlang des Weges ändernden Bedämpfungsfläche aus elektrisch leitendem, also elektromagnetisch dämpfendem, Material versehen ist,
- Fig.4: die Verwendung eines erfindungsgemäßen Spulenaufbaus zum Abtasten einer sich über einen Winkel erstreckenden und diesem entlang ändernden Bedämpfungsfläche aus elektrisch leitendem Material, und
- Fig.5: die Verwendung des Spulenaufbaus in Form einer Spulenanordnung gemäß Anspruch 6 zum Abtasten eines aus Flächen elektrisch leitenden Materials aufgebauten Codes, der hier als Gray-Code gestaltet ist.

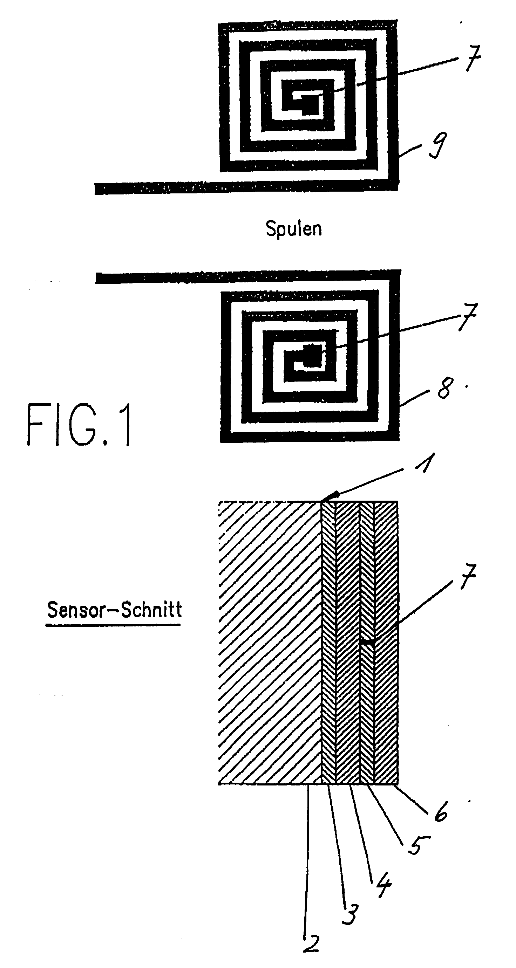

In Fig. 1 bezeichnen:
- 1: den Spulenaufbau,
- 2: den hier aus weichmagnetischem Material bestehenden Träger des Spulenaufbaus 1,
- 3: eine direkt auf den Träger 2 aufgebrachte Isolierschicht,
- 4: eine über der Isolierschicht 3 angeordnete erste Feinstleiter-Lage,
- 5: eine über der Feinstleiter-Lage 4 angeordnete weitere Isolierschicht,
- 6: eine über der Isolierschicht 5 angeordnete weitere Feinstleiter-Lage,
- 7: eine die Isolierschicht 4 durchsetzende Durchkontaktierung zwischen den Feinstleiter-Lagen 4 und 6,
- 8: den Feinstleiter der Feinstleiter-Lage 4, und
- 9: den Feinstleiter der Feinstleiter-Lage 6.

Der Strom wird dem einen Feinstleiter an dem bei der Draufsicht in Fig. 1 nach links herausgeführten Ende zugeführt, durchströmt diesen zur Mitte, fließt von dort über die Durchkontaktierung 7 zur Mitte des anderen Feinstleiters und durchströmt. diesen nach außen zum nach links herausgeführten Ende hin, von wo er abgeleitet wird.

Über die in Fig. 1 äußerste Feinstleiter-Lage 6 könnten, jeweils unter Einfügung einer isolierenden Zwischenschicht, noch weitere Feinstleiter-Lagen aufgebracht werden. Die Feinstleiter-Lage 6 würde dann mit der nächstfolgenden über sich zwischen deren äußeren Enden erstreckende Durchkontaktierung verbunden, die letztere mit der folgenden wieder über eine Durchkontaktierung in der Mitte u.s.w.

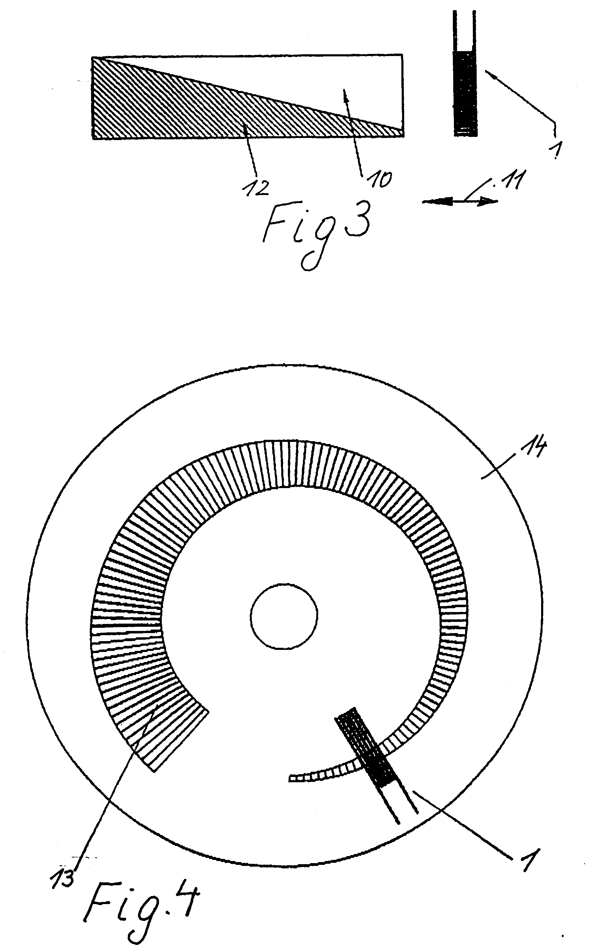

Bei der analogen Wegstreckenmessung gemäß Fig. 3 werden ein Spulenaufbau 1 und ein Geberlineal 10 relativ zueinander in Richtung des Pfeiles 11 bewegt, wobei die Spule durch eine dreieckförmige Bedämpfungsfläche 12 aus elektrisch leitendem Material in wachsendem Ausmaß bedämpft wird, je mehr sich der Spulenaufbau 1 dem über die volle Breite des Geberlineals 10 reichenden Ende der Bedämpfungsfläche 12 nähert. Die Bedämpfung ändert sich hier linear entlang des zu messenden, über die Länge der Bedämpfungsfläche 12 reichenden Weges.

Bei der in Fig. 4 wiedergegebenen Verwendung des Spulenaufbaus zur Messung eines Winkels wird ein Spulenaufbau 1 durch eine Bedämpfungsfläche 13 von mit dem Winkel linear zunehmender Breite bedämpft, die auf eine sich um ihren Mittelpunkt drehende Scheibe 14 aufgebracht ist. Der Spulenaufbau 1 ist hier ortsfest angeordnet. Die Größe der Bedämpfung ändert sich linear proportional mit Winkel, über den sich die Scheibe 14 unter dem Spulenaufbau 1 dreht.

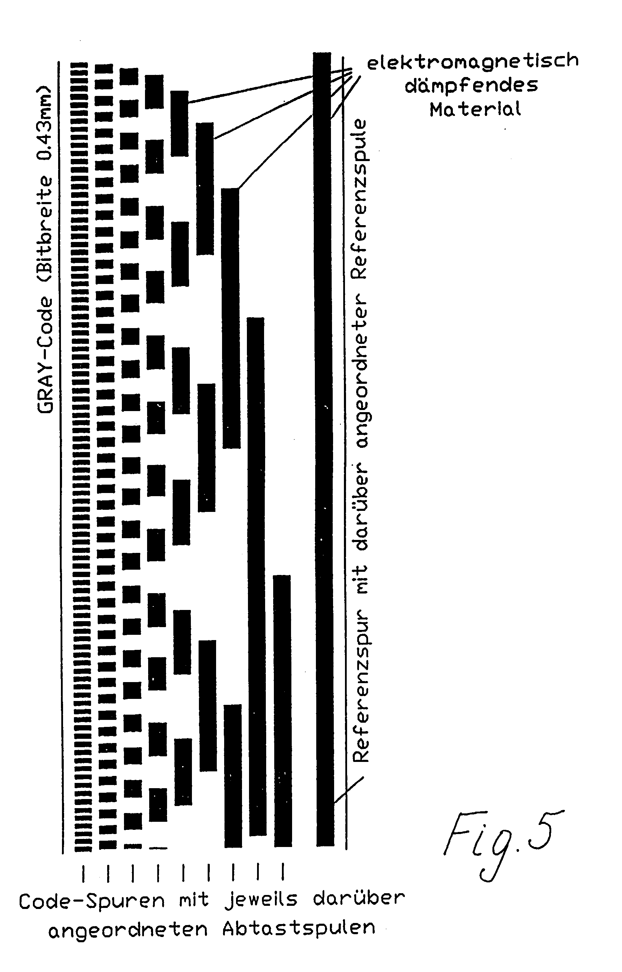

Bei der Verwendung gemäß Fig. 5 erstreckt sich eine Spulenanordnung 15, bei der mehrere Spulenaufbauten 1 nebeneinander auf einem gemeinsamen Träger 2 angeordnet sind, senkrecht zu neun nebeneinander auf einer isolierenden Unterlage 16 angeordneten Codespuren 17, die aus elektrisch leitenden, in Fig. 5 schwarz eingezeichneten Flächen 17a aufgebaut sind, die eine von Spur zu Spur unterschiedliche innerhalb der einzelnen Spuren aber gleichbleibende Länge in Längsrichtung der Unterlage 17 haben. Jeder dieser nebeneinander angeordneten, sich in Fig. 5 vertikal von unten nach oben erstreckenden neun Codespuren ist in der Spulenanordnung 15 ein eigener Spulenaufbau 1 zugeordnet. Eine weitere, durch eine über die Spurlänge durchgehende Fläche aus elektrisch leitendem Material gebildete Spur 17b stellt eine Referenzspur dar, der ebenfalls ein eigener Spulenaufbau 1 in der Spulenanordnung 15 zugeordnet ist. Die neun Codespuren 17a bauen einen Gray-Code auf. Wenn die Spulenanordnung 15 und die Codespuren 17a relativ zueinander in Längsrichtung der Unterlage 17 bewegt werden, werden die einzelnen Spulenaufbauten 1 entsprechend den Feldern aus elektrisch leitendem Material bedämpft und vermögen jeweils ein binäres Signal abzugeben, dessen Wert davon abhängt, ob sich der jeweilige Spulenaufbau 1 über einem Feld 17a oder einem Zwischenraum zwischen in Spurrichtung benachbarten Feldern 17a befindet. Die Gesamtheit der Signale der einzelnen Spulenaufbauten 1 in der Spulenanordnung 15 ergibt eine Binärzahl, deren Wert der augenblicklichen Längsposition der Spulenanordnung 15 bezüglich der Codespuren 17a und damit der Längsposition der Unterlage 17 der Codespuren 17a bezüglich der Spulenanordnung 15 entspricht.

Weitere Einzelheiten der Abtastung der Codespuren sind in der älteren, nicht vorveröffentlichten EP-A1-0489350, der Anmelderin offenbart (Art. 54(3,4)EPÜ).

## Patentansprüche

1. Spulenaufbau (1), bei dem auf eine Außenfläche eines Trägers (2) eine Lage eines sich spiralförmig erstreckenden Leiters oder mehrere, jeweils durch eine Isolierschicht (3,5) gegeneinander isolierte Lagen (4,6) solcher Leiter (8,9) übereinander aufgebracht ist/sind und daß die Leiter (8,9) übereinander befindlicher Lagen (4,6) durch die Isolierschichten (3,5) hindurch seriell durchkontaktiert (7) sind, **dadurch gekennzeichnet,** daß für die Anwendung bei induktiven Sensoren der Träger (2) aus weichmagnetischem oder hartmagnetischem Material besteht und die Leiterlagen (4,6) als Feinstleiter in Dickschichttechnik auf diesen Träger (2) aufgebracht sind.

2. Spulenaufbau nach Anspruch 1, **dadurch gekennzeichnet,** daß die Außenfläche des Trägers (2) von der ihr benachbarten Feinstleiterlage (4) durch eine Isolierschicht (3) getrennt ist.

3. Spulenaufbau nach Anspruch 1 oder 2, **dadurch gekennzeichnet,** daß die Außenfläche des Trägers (2) eben ist.

4. Spulenaufbau nach Anspruch 1 oder 2, **dadurch gekennzeichnet,** daß die Außenfläche des Trägers (2) gewölbt ist.

5. Spulenanordnung für induktive Sensoren, **dadurch gekennzeichnet,** daß mehrere Spulenaufbauten (1) gemäß einem der Ansprüche 1 bis 4 nebeneinander auf einem gemeinsamen Träger (2) aufgebracht sind.

## Claims

1. Coil construction (1), in which a layer of a spirally extending conductor or several layers (4, 6), which are insulated relative to one another each time by an insulating coating (3, 5), of such conductors (8, 9) is or are mounted one above the other on an outer surface of a support (2) and that the conductors of layers (4, 6) disposed one above the other are in serial contact (7) through the insulating coatings, characterised thereby that for use with inductive sensors the support (2) consists of soft magneteic or hard magnetic material and the conductor layers (4, 6) are mounted on this support (2) as fine conductors in thick-coating technology.

2. Coil construction according to claim 1, characterised thereby that the outer surface of the support (2) is separated by an insualting coating (3) from the fine conductor layer (4) adjacent thereto.

3. Coil construction according to claim 1 or 2, characterised thereby that the outer surface of the carrier (2) is flat.

4. Coil construction according to claim 1 or 2, characterised thereby that the outer surface of the carrier (2) is convex.

5. Coil arrangement for inductive sensors, characterised thereby that several coil constructions (1) according to one of claims 1 to 4 are mounted alongside one another on a common support (2).

## Revendications

1. Structure bobinée (1), dans laquelle il est déposé sur une surface extérieure d'un support (2) une strate d'un conducteur qui s'étend en spirale ou plusieurs strates (4, 6) à conducteur (8, 9) de ce genre qui sont isolées les unes des autres par une couche isolante (3, 5), et dans laquelle les conducteurs (8, 9) de strates (4, 6) superposées sont interconnectés (7) en série au travers des couches (3, 5) isolantes, caractérisée en ce que, pour l'utilisation dans des capteurs inductifs, le support (2) est en un matériau magnétique tendre ou en un matériau magnétique dur et les strates (4, 6) à conducteur sont déposées comme conducteurs très fins sur ce support (2), en technique des couches épaisses.

2. Structure bobinée suivant la revendication 1, caractérisée en ce que la surface extérieure du support (2) est séparée par une couche (3) isolante de la strate (4) à conducteur très fin qui en est voisine.

3. Structure bobinée suivant la revendication 1 ou 2, caractérisée en ce que la surface extérieure du support (2) est plane.

4. Structure bobinée suivant la revendication 1 ou 2, caractérisée en ce que la surface extérieure du support (2) est cintrée.

5. Montage de bobines destiné à des capteurs inductifs, caractérisé en ce que plusieurs structures bobinées (1) suivant l'une des revendications 1 à 4 sont montées côte-à-côte sur un support (2) commun.
